# EUROPÄISCHE PATENTSCHRIFT

(11) **EP 3 615 853 B1**
(45) Veröffentlichungstag und Bekanntmachung des Hinweises auf die Patenterteilung: **24.03.2021**
(21) Anmeldenummer: 18722417.5
(22) Anmeldetag: 19.04.2018
(51) Int. Cl.: F16K 31/06, F16K 27/04

(54) **SCHIEBERPROPORTIONALVENTIL FÜR DIE FÖRDERVOLUMENVERSTELLUNG EINER VERDRÄNGERPUMPE, MONTAGEVERFAHREN SOWIE SYSTEM**
PROPORTIONAL SPOOL VALVE FOR ADJUSTING THE DISPLACED VOLUME OF A DISPLACEMENT PUMP, ASSEMBLY METHOD AND SYSTEM
DISTRIBUTEUR PROPORTIONNEL À TIROIR POUR LE RÉGLAGE DU VOLUME DE REFOULEMENT D'UNE POMPE VOLUMÉTRIQUE, PROCÉDÉ DE MONTAGE ET SYSTÈME

(30) Priorität: 27.04.2017 DE 102017109061
(43) Veröffentlichungstag der Anmeldung: 04.03.2020
(73) Patentinhaber: Eto Magnetic GmbH, 78333 Stockach (DE)
(72) Erfinder: FEINDLER, Michael, 78333 Stockach (DE); NIEWEGLOWSKI, Marcin, 54610 Wroclaw (PL)
(74) Vertreter: Patent- und Rechtsanwälte Behrmann Wagner PartG mbB
(86) Internationale Anmeldenummer: PCT/EP2018/060019
(87) Internationale Veröffentlichungsnummer: WO 2018/197327

(56) Entgegenhaltungen:
- DE-A1- 10 259 107
- DE-A1- 10 334 684
- DE-A1-102007 033 146
- DE-A1-102010 025 171
- DE-A1-102014 012 306
- US-A1- 2011 147 630
- US-A1- 2014 261 716

## Beschreibung

Die Erfindung betrifft ein Schieberproportionalventil gemäß dem Oberbegriff des Anspruchs 1 für die Verstellung eines Fördervolumenstroms einer Verdrängerpumpe, insbesondere einer Ölpumpe in einem Kraftfahrzeug, mit einem Ventilgehäuse und einem in dem Ventilgehäuse entlang einer Verstellachse verschiebbar gelagerten Ventilschieber, der durch Bestromen einer elektrischen Spulenanordnung (Verstelleinrichtung) entgegen der Federkraft einer sich axial an einem relativ zu dem Ventilgehäuse fixierten federhalterabstützenden Ventilfeder verschiebbar ist.

Ferner betrifft die Erfindung ein Montageverfahren für ein derartiges Schieberproportionalventil gemäß dem Oberbegriff des Anspruchs 9 sowie ein System, insbesondere ein Ölfördersystem in einem Kraftfahrzeug, gemäß Anspruch 14, umfassend eine Verdrängerpumpe, insbesondere eine Flügelrad- oder Flügelzellenpumpe und ein erfindungsgemäßes Schieberproportionalventil, das ausgebildet und angeordnet ist, um das Fördervolumen der Verdrängerpumpe. Verdrängerpumpen fördern Fluide mit einem zur Pumpengeschwindigkeit proportionalen Volumenstrom. Das Fördervolumen pro Umdrehung oder hin- und hergehendem Hub (spezifischer Volumenstrom) ist konstant. Die Konstanz pro Umdrehung oder Hub und dementsprechend die Proportionalität zur Pumpengeschwindigkeit ist nachteilig in KfzÖlkreisläufen, in denen das von der jeweiligen Pumpe zu versorgende Aggregat, insbesondere ein Verbrennungsmotor einen Fluidbedarf (Ölbedarf) hat, der in einem oder mehreren Geschwindigkeitsbereich(en) der Verdrängerpumpe geringer ist als der sich aus der Proportionalität ergebende Volumenstrom. Diese Problematik wurde gelöst mit beispielsweise in der US 6,126,420 A beschriebenen Verdrängerpumpen mit verstellbarem Fördervolumenstrom.

Die DE 10 2007 033 146 A1 beschreibt nun ein Ölfördersystem in einem Kraftfahrzeug mit einer fördervolumenveränderlichen Verdrängerpumpe und einem Schieberproportionalventil zur Variation dieses Fördervolumens.

Die für diesen Zweck bekannten Einstellventile werden proportional, insbesondere PWM, angesteuert und umfassen einen in einem Ventilgehäuse entgegen der Federkraft einer Ventilfeder verstellbaren Ventilschieber. Diese stützt sich einends axial an dem Ventilschieber und andernends an einem Aluminium-Federhalter ab, der in das Ventilgehäuse eingepresst oder durch Verstemmen festgelegt ist. Durch die Montage des Federhalters kann es im Stand der Technik zur mechanischen Verformungen und erwünschten Kräften auf das Ventilgehäuse und/oder den Ventilschieber kommen, was die Funktionalität negativ beeinflusst.

Des Weiteren beschreibt die US 2014/0261716 A1 ebenfalls ein Einstellventil zur Verstellung des Fördervolumens einer Ölpumpe für den Einsatz in einem Motor.

Die DE 103 34 684 A1 beschreibt ein Einstellventil zur Variation des Ölfördervolumens in einem Motor, wobei ein Ventilkörper einen Kunststoffabschnitt aufweist.

Ausgehend von dem vorgenannten Stand der Technik liegt der Erfindung daher die Aufgabe zugrunde, ein verbessertes Schieberproportionalventil für die Verstellung eines Fördervolumenstroms einer Verdrängerpumpe, insbesondere einer Flügelradpumpe oder einer Flügelzellenpumpe anzugeben, wobei sich das Schieberproportionalventil durch eine möglichst kraftarme bzw. die Passgenauigkeit nicht negativ beeinflussende Montage sowie eine gute Einstellung eines Arbeitspunktes und/oder eine gute Kompensationsmöglichkeit für Toleranzen bei der Montage auszeichnen soll.

Ferner besteht die Aufgabe darin, ein entsprechend verbessertes Montageverfahren für ein derartiges Schieberproportionalventil anzugeben sowie ein Verdrängerpumpensystem, insbesondere ein Ölfördersystem in einem Kraftfahrzeug, umfassend ein entsprechend verbessertes Schieberproportionalventil zur Einstellung des Fördervolumens der Verdrängerpumpe.

Diese Aufgabe wird hinsichtlich des Schieberproportionalventils mit den Merkmalen des Anspruchs 1 gelöst.

Im Hinblick auf die konkrete Ausgestaltung des erfindungsgemäßen Schieberproportionalventils als Mehrwegeventil gibt es unterschiedliche Möglichkeiten - diese hängen insbesondere von der Gestaltung der Verdrängerpumpe ab. Falls die Verdrängerpumpe zwei über das Schieberproportionalventil versorgbare Druckkammern aufweist, die auf ein Stellglied der Verdrängerpumpe zur Einstellung des Volumenstroms in der Art eines doppelt wirkenden Zylinders einwirken, ist es bevorzugt das Schieberproportionalventil als 4/3-Wegeventil auszugestalten. Für den Fall, dass die Verdrängerpumpe nur eine Druckkammer aufweist, die mit dem Stellglied in der Art eines einfach wirkenden Zylinders zusammenwirkt, kann das Schieberproportionalventil alternativ beispielsweise auch als 3/2-Wegeventil ausgestaltet werden.

Hinsichtlich des Montageverfahrens wird die Aufgabe mit den Merkmalen des Anspruchs 9 und hinsichtlich des Systems mit den Merkmalen des Anspruchs 14 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Der Erfindung liegt der Gedanke zugrunde, bei einem Schieberproportionalventil für die Verstellung eines Fördervolumenstroms einer Verdrängerpumpe entgegen der bisherigen Praxis sowohl den Federhalter zum axialen Abstützen der Ventilfeder als auch das den Ventilschieber und die Ventilfeder aufnehmende Ventilgehäuse aus Kunststoff auszubilden und Federhalter und Ventilgehäuse unter Ausbildung einer materialschlüssigen Schweißverbindung fest aneinander zu fixieren. Im Gegensatz zu der im Stand der Technik eingesetzten Anbindung von Aluminiumteilen, in der Regel über eine Presspassung und mechanische Verformung des Aluminiums ist der Krafteintrag zur erfindungsgemäßen Fixierung des Federhalters an dem Ventilgehäuse durch die Realisierung einer materialschlüssigen Schweißverbindung gering, sodass negative Einflüsse auf die Toleranzen bzw. Funktion des Volumenstrom-Einstellventils sicher vermieden werden. Insbesondere kommt es durch die erfindungsgemäße Schweißverbindung nicht zu einer negativen Beeinflussung der Passung zwischen Ventilschieber und dem diesen umschließenden Ventilgehäuse. Darüber hinaus liefert die erfindungsgemäße Bauweise sowie das erfindungsgemäße Montageverfahren zur Montage des Schieberproportionalventils für die Volumenstromverstellung eine optimierte Einstellmöglichkeit der Federvorspannung bei der Montage, insbesondere um einen später noch zu erläuternden Arbeitspunkt für eine Selbstregulierung des Fördervolumenstroms im Falle eines Ausfalls der elektrischen Spulenanordnung bzw. der elektromagnetischen Verstelleinrichtung zu ermöglichen und/oder um, insbesondere bei Verzicht auf eine vorerwähnte Selbstregulierung, Fertigungstoleranzen des Magnetkreises und/oder Abmessungstoleranzen der zusammenwirkenden Komponenten ausgleichen zu können, um bei Serienschieberproportionalventilen bei vorgegebener bzw. gleicher Ansteuerung ein resultierendes gleiches Ventil- bzw. Stellverhalten des Schiebers zu gewährleisten.

Im Hinblick auf die Realisierung der materialschlüssigen Schweißverbindung gibt es unterschiedliche Möglichkeiten. Ganz besonders bevorzugt ist es, den Federhalter und das Ventilgehäuse durch Ultraschallschweißen miteinander zu verbinden. Zusätzlich oder alternativ ist jedoch beispielsweise auch die Realisierung eines Laserschweißverfahrens bzw. einer Laserschweißverbindung möglich.

Auch im Hinblick auf die Anordnung bzw. Positionierung der materialschlüssigen Schweißverbindung gibt es unterschiedliche Möglichkeiten.

So ist es gemäß einer ersten Ausführungsform möglich und bevorzugt, wenn der Federhalter und das Ventilgehäuse (sich) in radialer Richtung bezogen auf die Verstellachse des Ventilschiebers überlappen. Erfindungsgemäß weist der Federhalter mindestens einen nach radial außen, insbesondere über einen inneren Zylinderabschnitt, bevorzugt einen Hohlzylinderabschnitt, vorstehenden Schieberabschnitt (Radialabschnitt) auf, der in Umfangsrichtung einem, insbesondere in radialer Richtung nach außen, bevorzugt über einen inneren, insbesondere hohlzylindrischen, Gehäuseabschnitt, vorstehenden Ventilgehäuseabschnitt, in Form eines in radialer Richtung nach außen vorstehenden Steges, gegenüberliegt, sodass die materialschlüssige Schweißverbindung in einer Umfangsrichtung zwischen dem Schieberabschnitt und dem Ventilgehäuseabschnitt realisiert ist. Dabei ist es bevorzugt, wenn der Schieberabschnitt einteiliger bzw. monolithischer Bestandteil des bevorzugt einteiligen (monolithischen) bzw. aus einem Guss hergestellten Kunststoff-Federhalters ist. Das gleiche gilt analog für den Ventilgehäuseabschnitt, mit dem der Schieberabschnitt verschweißt ist - auch dieser ist bevorzugt einteilig bzw. monolithisch mit dem Kunststoff-Ventilgehäuse ausgebildet. Generell eröffnet die vorstehend erläuterte Ausführungsform mit mindestens einem nach radial außen vorstehenden Schieberabschnitt und mindestens einem diesem zugeordneten, in Umfangsrichtung gegenüberliegenden Ventilgehäuseabschnitt ein Verschweißen in Form eines Durchschweißens, bei dem der Ventilgehäuseabschnitt und/oder der Schieberabschnitt in den jeweils gegenüberliegenden Abschnitt in Umfangsrichtung durchschweißt, sprich mit einer Schweißsonde, insbesondere einer Ultraschallsonde, ganz besonders bevorzugt einer mehrstiftigen Sonde durchfahren und dabei Kunststoffmaterial angeschmolzen und in den in Umfangsrichtung gegenüberliegenden Abschnitt (Schiebeabschnitt oder Ventilgehäuseabschnitt) zur Ausbildung der materialschlüssigen Verbindung verdrängt wird.

Wie später noch erläutert werden wird ist es zusätzlich zur Realisierung einer in Umfangsrichtung wirksamen materialschlüssigen Schweißverbindung zwischen einem Schieberabschnitt des Federhalters und einem, insbesondere nach radial außen vorstehenden Ventilgehäuseabschnitt des Ventilgehäuses möglich den Federhalter und das Ventilgehäuse an in radialer Richtung aneinander gegenüberliegenden Umfangskontaktflächen zu verschweißen, insbesondere derart, dass eine sich in eine Umfangsrichtung erstreckende Außenumfangsfläche des Federhalters mit einer, insbesondere formkongruenten in radialer Richtung nach innen weisenden und sich in einer Umfangsrichtung erstreckenden Innenumfangsfläche des Ventilgehäuses verschweißt ist. Ganz besonders bevorzugt wird bei einer derartigen Ausführungsform auf eine radiale Überlappung von Federhalter und Ventilgehäuse verzichtet. Bevorzugt erfolgt das Verscheißen der in radialer Richtung einander gegenüberliegenden Umfangskontaktflächen durch Durchstoßen des (äußeren) Gehäuseabschnittes in radialer Richtung nach innen mit einer Schweißsonde, insbesondere einer Ultraschweißsonde, ganz besonders bevorzugt einer mehrstiftigen Sonde zum Aufschmelzen und Verdrängen von Kunststoffmaterial des Ventilgehäuses in den Federhalter hinein und dadurch Ausbildung einer materialschlüssigen Schweißverbindung.

Im Hinblick auf die zuerst erwähnte Möglichkeit der Realisierung einer Schweißverbindung zwischen mindestens einem Schieberabschnitt des Federhalters und einem, insbesondere in radialer Richtung nach außen vorstehenden Ventilgehäuseabschnitt des Ventilgehäuses gibt es wiederum unterschiedliche Möglichkeiten. Ganz besonders bevorzugt ist eine Ausführungsform, bei der der Schieberabschnitt bei der Montage in axialer Richtung zwischen zwei in Umfangsrichtung beabstandete Ventilgehäuseabschnitte einschiebbar ist und mit mindestens einem dieser beiden Ventilgehäuseabschnitte, insbesondere mit beiden Ventilgehäuseabschnitten im Rahmen des erfindungsgemäßen Verfahrens materialschlüssig verschweißt wird. Die Ventilgehäuseabschnitte können dabei als nach radial außen, insbesondere über einen inneren Ventilgehäuseabschnitt, vorstehende Stege ausgebildet sein, die jedenfalls den Schieberabschnitt sandwichartig in Umfangsrichtung zwischen sich aufnehmen. Eine Ausführungsform mit mindestens einem zwischen zwei, stegförmigen Ventilgehäuseabschnitten aufgenommenen Schieberabschnitt ermöglicht eine besonders bevorzugte Realisierungsform, bei der eine Durchschweißung realisiert ist, derart, dass der Schieberabschnitt und mindestens ein Ventilgehäuseabschnitt materialschlüssig in Umfangsrichtung ineinandergreifen, was beispielsweise dadurch realisiert werden kann, dass mit einer Schweißsonde, bevorzugt einer Ultraschallschweißsonde der radial vorstehende Ventilgehäuseabschnitt in Umfangsrichtung durchstoßen wird und die Sonde dabei in den Schieberabschnitt eindringt und hierdurch beide Teile anschmilzt und die Schmelze der beiden Kunststoffteile sich formschlüssig verbindet. Dabei ist es möglich, dass die Schweißverbindung ausschließlich zwischen einem der Ventilgehäuseabschnitte und dem Schieberabschnitt realisiert ist oder aber dass die Schweißverbindung den Schieberabschnitt durchdringt, sodass der Schieberabschnitt zu beiden Umfangsseiten mit je einem Ventilgehäuseabschnitt materialschlüssig verschweißt ist. Auch ist es denkbar, beide Ventilgehäuseabschnitte ineinander entgegengesetzte Umfangsrichtungen mit, insbesondere je einer, Schweißsonde bis in den zwischenangeordneten Schiebeabschnitt hinein zu durchstoßen, also die Schweißverbindungen zu beiden Seiten des Schiebeabschnitts von zwei Seiten her zu realisieren.

Gemäß einer alternativen Ausführungsform liegt dem Schieberabschnitt in Umfangsrichtung nur ein in radialer Richtung nach außen vorstehender, stegförmiger Ventilgehäuseabschnitt gegenüber, der, mittels durch Schweißen, mit dem Schieberabschnitt materialschlüssig verbunden ist. Im Rahmen des Verfahrens ist es bevorzugt, wenn bei diesem Schweißschritt der Schieberabschnitt von der von dem Ventilgehäuseabschnitt abgewandten Umfangsseite her mit einem Ambos in Richtung Ventilgehäuseabschnitt kraftbeaufschlagt ist, während der Ventilgehäuseabschnitt in Umfangsrichtung, d.h. in Richtung Ambos in den Schiebeabschnitt hinein von einer Schweißsonde, bevorzugt einer Ultraschallschweißsonde durchfahren bzw. durchschweißt und dadurch mit dem Schieberabschnitt verbunden wird.

Die Ausführungsform mit nur einem einem jeweiligen Schieberabschnitt zugeordneten, nach radial außen vorstehenden stegförmigen Ventilgehäuseabschnitt gewährleistet einen höheren Freiheitsgrad bei der Herstellung der Schweißverbindung aufgrund der vorerwähnten möglichen (Gegen-)Druckbeaufschlagung in Umfangsrichtung.

Unabhängig davon, ob ein radial vorstehender Schieberabschnitt auf zwei Umfangsseiten oder nur auf einer Umfangsseite mit einem radial vorstehenden Ventilgehäuseabschnitt verschweißt wird ist es möglich, diese Verschweißung vollflächig zu realisieren oder nur punktuell, insbesondere an über die Kontaktflächen verteilt angeordneten Schweißpunkten, die von einer entsprechenden in Umfangsrichtung vorstehenden Oberflächenstruktur des Schieberabschnitts und/oder des entsprechenden Ventilgehäuseabschnitts definiert bzw. vorgegeben werden.

Vorstehende Ausführungsformen mit Schieberabschnitt sind grundsätzlich mit einem einzigen radial vorstehenden Schieberabschnitt des Federhalters realisierbar, dem je nach Ausführungsform nur ein vom Ventilgehäuse radial vorstehender Ventilgehäuseabschnitt oder alternativ zwei in Umfangsrichtung aneinander gegenüberliegende Ventilgehäuseabschnitte zugeordnet ist bzw. sind. Bevorzugt ist jedoch eine Ausführungsform mit mehreren, insbesondere zwei, ganz besonders bevorzugt genau zwei in Umfangsrichtung, bevorzugt gleichmäßig, beabstandeten, insbesondere diametral einander gegenüberliegenden Schieberabschnitten, denen jeweils ein einziger oder alternativ zwei in Umfangsrichtung beabstandete Ventilgehäuseabschnitte zur Realisierung einer jeweiligen materialschlüssigen Schweißverbindung zugeordnet ist bzw. sind.

Wie bereits erwähnt, ist es zusätzlich zur Realisierung der in Umfangsrichtung weisenden materialschlüssigen Schweißverbindung möglich eine in radialer Richtung wirksame materialschlüssige Schweißverbindung zwischen Federhalter und Ventilgehäuse zu realisieren. Bevorzugt wird im Fall der Realisierung einer Ultraschallverbindung das Ventilgehäuse von radial außen nach radial innen von einer Schweißsonde, insbesondere einer Ultraschallsonde durchfahren und somit eine radiale Durchschweißung realisiert. Die Ausführungsform mit dieser in radialer Richtung wirksamen Verschweißung ist, wie erwähnt, grundsätzlich zusätzlich zur Verschweißung mittels eines radialen Schieberabschnitts möglich - bevorzugt wird jedoch bei der Realisierung der in radialer Richtung wirksamen Verschweißung auf eine radiale Überlappung von Federhalter und Ventilgehäuse verzichtet.

Besonders bevorzugt ist eine Ausführungsform, bei der dem Federhalter ein Axialanschlag am Ventilgehäuse zur Begrenzung einer axialen Einsetzschiebebewegung des Federhalters in das Ventilgehäuse bei der Montage zugeordnet ist. Für die erwähnte Ausführungsform mit radial vorstehendem Schieberabschnitt ist es bevorzugt, wenn dieser den Gegenanschlag im Zusammenwirken mit dem Axialanschlag des Ventilgehäuses bildet.

Besonders bevorzugt ist eine Ausführungsform des Schieberproportionalventils, bei der dieses einen, bevorzugt axialen, Druckanschluss aufweist, der mit einem axialen Durchströmungskanal kommuniziert, der den, bevorzugt zumindest abschnittsweise hohlzylindrischen Federhalter in axialer Richtung durchsetzt und mit anderen Worten ist es bevorzugt, wenn der Federhalter hülsenförmig ausgestaltet ist und einen, insbesondere zentrischen Durchströmungskanal aufweist, durch den Fluid, insbesondere Öl vom Druckanschluss des Ventils in Richtung Ventilschieber strömen kann. Über den Durchströmungskanal kann das Fluid je nach Ventilschieberstellung entlang der Verstellachse hin zu mindestens einem, bevorzugt mantelseitig am Ventilgehäuse angeordneten, Arbeitsanschluss und/oder einem Tankanschluss strömen.

Unabhängig davon ist eine Ausführungsform des Schieberproportionalventils realisierbar und bevorzugt, bei der dieses analog zu der in der DE 10 2007 033 146 A1 beschriebenen Ausführungsform einen speziellen Ventilschieber aufweist, der sich dadurch auszeichnet, dass er in einander entgegengesetzt angeordnete und der Größe nach unterschiedliche Wirkflächen für ein Verstelldruck des Förderfluids, insbesondere Öl aufweist, um den größten Unterschied der Wirkflächen entsprechend eine auf den Ventilschieber der Ventilfeder entgegenwirkende Differenzkraft zu erzeugen. Auf diese Weise kann in an sich bekannter Art ein selbstregulierendes System geschaffen werden, bei welchem sich der Fördervolumenstrom, insbesondere Ölvolumenstrom der Verdrängerpumpe in einem bestimmten Fördervolumenbereich selbst reguliert.

Insbesondere bei einer derartigen Ausführungsform kommt es bei der Montage des erfindungsgemäßen Schieberproportionalventils auf eine exakte Einstellung des Arbeitspunktes bei der Montage an, wozu während der Montage die Axialposition des Federhalters individuell eingestellt bzw. angepasst wird, bevor der Federhalter dann erfindungsgemäß mit dem Ventilgehäuse verschweißt wird.

Die Erfindung führt auch auf ein Montageverfahren für ein erfindungsgemäßes, zuvor im Detail beschriebenes Schieberproportionalventil, wobei der Federhalter und das Ventilgehäuse sowie eine Ventilfeder bereitgestellt und die Ventilfeder und der Federhalter in das Ventilgehäuse eingeführt und daraufhin der Federhalter an dem Ventilgehäuse fixiert wird. Erfindungsgemäß erfolgt diese Fixierung durch Verschweißen des aus Kunststoff ausgebildeten Federhalters mit dem aus Kunststoff ausgebildeten Ventilgehäuse, insbesondere durch Ultraschallschweißen oder durch Laserschweißen unter Ausbildung einer materialschlüssigen Schweißverbindung. Im Hinblick auf die unterschiedlichen Realisierungsmöglichkeiten der Schweißverbindung wird auf vorstehende Erläuterungen verwiesen.

Ganz besonders bevorzugt ist es, wenn, wie erwähnt, vor dem Verschweißen die Federvorspannung der Ventilfeder durch individuelles Einstellen der Axialposition des Federhalters eingestellt und erst danach die Schweißverbindung realisiert wird.

Ferner führt die Erfindung auf ein System, insbesondere ein Ölfördersystem in einem Kraftfahrzeug, umfassend eine Verdrängerpumpe, beispielsweise eine Flügelkraftpumpe mit mindestens einem oder alternativ zwei einander entgegengesetzt wirkenden Druckräumen zur Verstellung eines Stellgliedes zur Einstellung des Fördervolumens der Förderpumpe. Ferner umfasst das System ein erfindungsgemäß ausgebildetes Schieberproportionalventil, welches bevorzugt mit der mindestens einen Druckkammer kommuniziert, um durch Druckbeaufschlagung bzw. Druckreduzierung mindestens eines Druckraums die Verstellung des Stellgliedes der Verdrängerpumpe und damit eine Einstellung, insbesondere Regelung des Fördervolumens der Verdrängerpumpe zu erreichen.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine Längsschnittansicht eines bevorzugten Ausführungsbeispiels eines nach dem Konzept der Erfindung ausgebildeten Schieberproportionalventils für die Verstellung eines Fördervolumens einer Verdrängerpumpe,
- Fig. 2a:: eine Detailansicht einer möglichen Ausführungsform des Schieberproportionalventils gemäß Fig. 1, bei dem eine in Umfangsrichtung wirksame Schweißverbindung zwischen zwei diametral gegenüberliegenden Schieberabschnitten und jeweils zwei in Umfangsrichtung gegenüberliegenden radial vorstehenden stegförmigen Gehäuseabschnitten realisiert ist,
- Fig. 2b:: eine Variation des Ausführungsbeispiels gemäß Fig. 2a zur Realisierung punktueller Schweißverbindungen,
- Fig. 3a und Fig. 3b:: unterschiedliche Ansichten einer alternativen Ausführungsform eines nach dem Konzept der Erfindung ausgebildeten Schieberproportionalventils, bei dem die Schieberabschnitte jeweils nur einseitig in Umfangsrichtung wirksam mit einem stegförmigen, radial vorstehenden Gehäuseabschnitt verschweißt sind, und
- Fig. 4a und Fig. 4b:: unterschiedliche Ansichten einer weiteren Ausführungsform eines nach dem Konzept der Erfindung ausgebildeten Schieberproportionalventils, bei der eine in radialer Richtung wirksame Schweißverbindung zwischen Federhalter und Ventilgehäuse umgesetzt ist.

In den Figuren sind gleiche Elemente und Elemente mit der gleichen Funktion mit den gleichen Bezugszeichen gekennzeichnet.

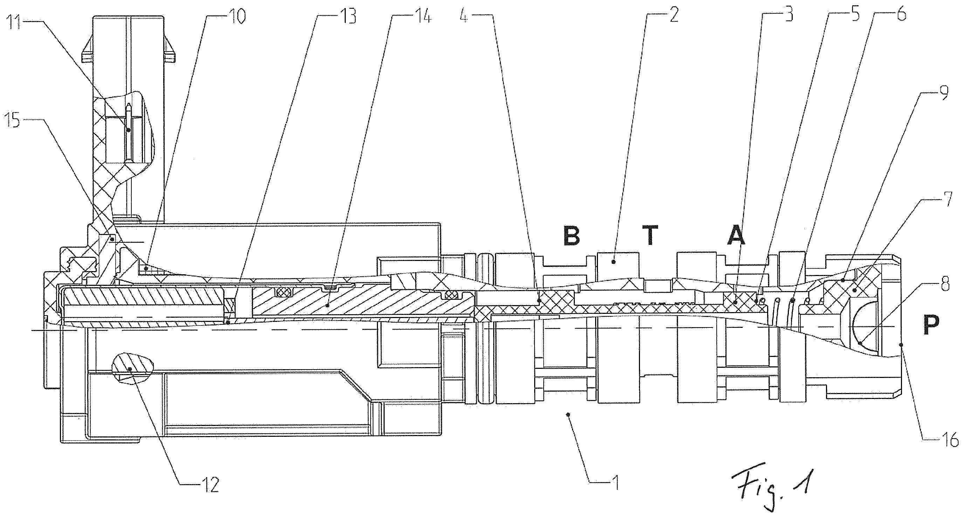

In Fig. 1 ist ein Ausführungsbeispiel eines nach dem Konzept der Erfindung ausgebildeten Schieberproportionalventils 1 für die Verstellung eines Fördervolumens, vorliegend eines Ölvolumens, einer Verdrängerpumpe, beispielsweise einer Flügelzellenpumpe (nicht gezeigt) dargestellt.

Das Schieberproportionalventil 1 umfasst ein Ventilgehäuse 2 aus Kunststoff, in dem ein Ventilschieber 3 entlang einer Verstellachse V verschiebbar gelagert ist.

Vorliegend ist das Schieberproportionalventil 1 als 4/3-Wegeventil ausgebildet und umfasst einen axial stirnseitigen Druckanschluss P, welcher im Rahmen des Systems mit der Druckseite eines Ölkreislaufs mit Verdrängerpumpe verbunden ist. Ferner umfasst das Schieberproportionalventil 1 im Ventilgehäuse 2 einen mantelseitigen Tankanschluss T, der mit einer Niederdruckseite des Ölkreislaufs bzw. einem Ölreservoir verbunden ist. Darüber hinaus umfasst das Schieberproportionalventil 1 zwei Arbeitsanschlüsse A, B, die, bevorzugt wechselseitig, mit dem Druckanschluss P und dem Tankanschluss T durch Verstellen des Ventilschiebers 3 verbindbar sind, um zwei Druckkammern der Verdrängerpumpe zur Einstellung des Fördervolumens mit Öldruck zu beaufschlagen bzw. mit der Niederdruckseite zu verbinden, um hierdurch eine Verstellung eines Stellgliedes der Verdrängerpumpe zu bewirken und dadurch das Fördervolumen zu beeinflussen. Alternativ ist das Schieberproportionalventil 1 auch als 3/2-Wegeventil mit nur einem einzigen Arbeitsanschluss realisierbar, wenn nicht zwei gegenläufig wirkende Druckkammern in der Verdrängerpumpe vorgesehen sind, sondern das Stellglied über den einzigen Druckraum entgegen der Federkraft einer Rückstellfeder verstellbar ist.

Vorliegend umfasst der Ventilschieber 3 jedenfalls eine erste und eine zweite verstellwirksame (jeweils axiale) Wirkfläche 4, 5, wobei die erste Wirkfläche 4 größer bemessen ist als die zweite Wirkfläche 5, sodass eine Fluidkraftkomponente entlang der Verstellachse V entgegen der Federkraft einer Ventilfeder 6 wirkt, die sich einends axial am Ventilschieber 3 und andernends an einem Federhalter 7 aus Kunststoff abstützt, der unmittelbar dem Druckanschluss P stromabwärts nachgeordnet ist und einen Durchströmungskanal 8 aufweist, um das Fluid, vorliegend Öl, in Richtung hin zum Ventilschieber 3 bzw. den Arbeitsanschlüssen A, B zu leiten. Erfindungsgemäß ist der Federhalter 7 über eine materialschlüssige Schweißverbindung 9 mit dem Ventilgehäuse 2 verschweißt.

Zum Verstellen des Ventilschiebers 3 zwischen seinen unterschiedlichen Stell- bzw. Axialpositionen umfasst das Schieberproportionalventil eine bevorzugt PWM-angesteuerte Spulenanordnung 10, die über einen elektrischen Kontaktanschluss 11 ansteuerbar ist. Durch Bestromen der Spulenanordnung 10 wird ein abschnittsweise von der Spulenanordnung 10 umschlossener Anker 12 in der Zeichnungsebene nach rechts gegen einen Stößel 13 verstellt, der einen magnetischen Kern 14 in Richtung Ventilschieber 3 durchsetzt, um wiederum den Ventilschieber 3 zu verstellen. Beabstandet vom Kern 14 ist zur Schließung des Magnetkreises dem Anker 12 ein Joch 15 zugeordnet.

Zur Montage des Schieberproportionalventils 1 werden der Ventilschieber 3, die Ventilfeder 6 sowie der Federhalter 7 durch eine in der Zeichnungsebene rechte, stirnseitige bzw. axiale Einführöffnung 16 in das Ventilgehäuse 2 eingeführt. Durch Messen der Druckverhältnisse an mindestens einem der Anschlüsse A, B, T bei gegebener Bestromung der Spulenanordnung 10 und bekanntem Druck am Druckverschluss wird der Federhalter 7 axial verschoben, bis sich der beabsichtigte Solldruck am entsprechenden Anschluss ergibt, woraufhin dann die materialschlüssige Schweißverbindung 9 erstellt wird. Hierzu gibt es wiederum unterschiedliche Möglichkeiten.

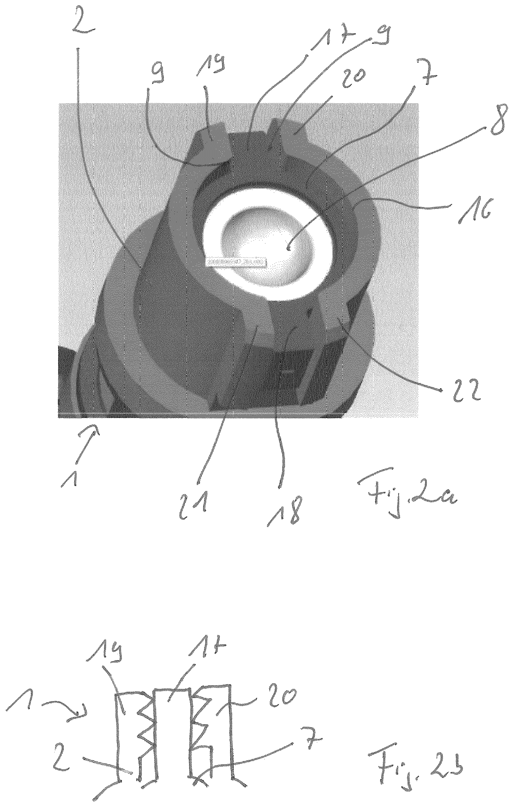

Bei einem in Fig. 2 gezeigten Ausführungsbeispiel mit schrägem Blick auf die Einfuhröffnung 16 umfasst der Federhalter 7 zwei diametral gegenüberliegende Schieberabschnitte 17, 18, die bei der Montage axial entlang der Verstellachse V relativ zu dem Ventilgehäuse 2 verschoben werden. Jeder Schieberabschnitt 17, 18 ist einteilig mit dem restlichen Federhalter 7, vorliegend einem radial inneren Hohlzylinder ausgebildet. Die Schieberabschnitte 17, 18 sind jeweils in Umfangsrichtung aufgenommen zwischen zwei in Umfangsrichtung voneinander beabstandeten Ventilgehäuseabschnitten 19, 20, 21, 22, die vorliegend als nach radial außen über einen dem Federhalter 7 aufnehmenden hohlzylindrischen Abschnitt des Ventilgehäuses vorstehende Stege ausgebildet sind. Je nach Ausgestaltung bzw. Realisierung des Schweißverfahrens ist es möglich, Schieberabschnitte 17, 18 jeweils mit nur einem der zugeordneten Ventilgehäuseabschnitte 19, 20, 21, 22 oder jeweils mit beiden Ventilgehäuseabschnitten 19, 20, 21, 22 zu verschweißen, insbesondere mittels eines Durchschweißverfahrens, bei dem eine Schweißsonde, bevorzugt eine mehrstiftige Ultraschallsonde, in Umfangsrichtung durch einen Ventilgehäuseabschnitt 19, 20, 21, 22 bis in den zugehörigen Schieberabschnitt 17, 18 hineinbewegt wird, vorzugsweise über diesen hinaus bis in den jeweils gegenüberliegenden Ventilgehäuseabschnitt 19, 20, 21, 22 hinein. Wenn die einander gegenüberliegenden Flächen der Schieberabschnitte 17, 18 und Ventilgehäuseabschnitte 19, 20, 21, 22 unstrukturiert sind, erfolgt eine im Wesentlichen flächige Schweißverbindung 9. Alternativ ist eine in Fig. 2b angedeutete Ausführungsventile realisierbar, bei der sich Schieberabschnitt 17 und Ventilgehäuseabschnitte 20 nicht vollflächig kontaktieren, sondern bei der eine Oberflächenstruktur so beschaffen ist, dass sich punktuelle Schweißverbindungen 9 ergeben, die bevorzugt voneinander beabstandet sind.

Die in den Fig. 2a und 2b gezeigten Ausführungsbeispiele zeichnen sich dadurch aus, dass sich Ventilgehäuse 2 und Federhalter 7 in radialer Richtung überlappen und die Schweißverbindung 9 an in Umfangsrichtung einander gegenüberliegenden Kontaktflächen realisiert ist.

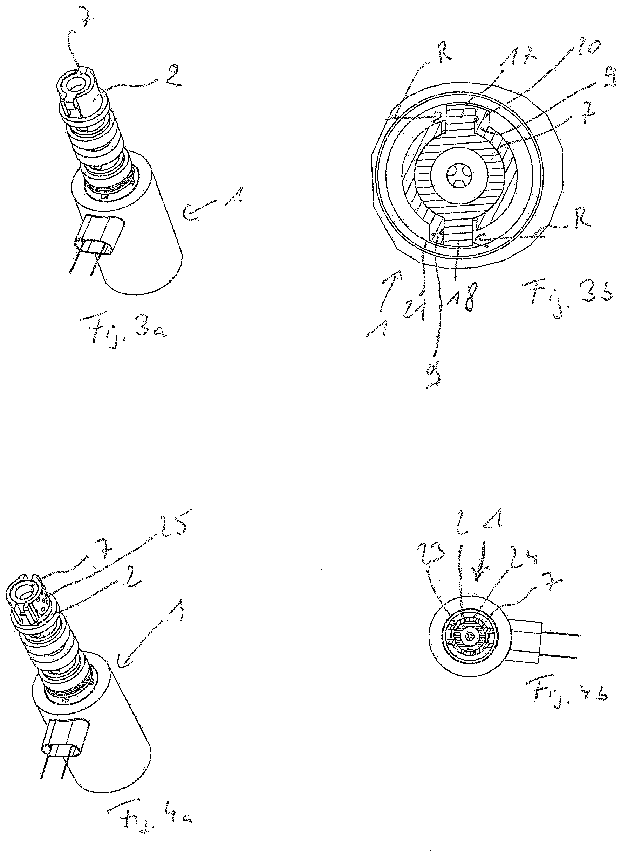

Eine weitere alternative Ausführungsform mit sich in radialer Richtung überlappendem Federhalter 7 und Ventilgehäuse 2 ist in den Fig. 3a und 3b gezeigt. Analog zu dem Ausführungsbeispiel gemäß Fig. 2a und 2b sind am Federhalter 7 wiederum zwei diametral angeordnete und sich in einander entgegengesetzte Radialrichtungen erstreckende bzw. vorstehende Schieberabschnitte 17, 18 vorgesehen, denen jedoch jeweils nur ein einziger stegförmiger und in radialer Richtung nach außen über einen im wesentlichen hohlzylindrischen Ventilgehäuseabschnitt vorstehender Ventilgehäuseabschnitt 20, 21 zugeordnet ist, sodass jeweils nur eine einseitige Schweißverbindung realisiert wird. Während des Schweißvorgangs werden die Schieberabschnitte 17, 18 jeweils in Pfeilrichtung R mittels eines nicht gezeigten Ambos kraftbeaufschlagt und gegen eine in Umfangsrichtung gegenüberliegende Kontaktfläche des zugehörigen Ventilgehäuseabschnitts 20, 21 gepresst, um die Ausbildung der Schweißverbindung 9 zu verbessern. Bevorzugt erfolgt für den Fall der Realisierung eines Ultraschallschweißverfahrens die Verschweißung derart, dass die Ventilgehäuseabschnitte 20, 21 jeweils von der dem Ambos abgewandten Umfangsseite her mit einer Schweißsonde, insbesondere einer mehrstiftigen Ultraschallsonde, bis in den zugehörigen Schieberabschnitt 17, 18 hinein durchstoßen werden und so die materialschlüssige Schweißverbindung realisiert wird.

Das im Folgenden erläuterte Ausführungsbeispiel gemäß den Fig. 4a und 4b kann zusätzlich zu den zuvor erläuterten Ausführungsformen bzw. Schweißverbindungen 9 realisiert werden. Der Federhalter 7 weist radial vorstehende Schieberabschnitte 17, 18 auf. Die Schweißung erfolgt hier in radialer Richtung bzw. zwischen zwei in radialer Richtung einander gegenüberliegenden Umfangskontaktflächen, zum einen am Außenumfang 23 des Federhalters 7 sowie zum anderen am radial inneren gegenüberliegenden und sich wie der Außenumfang 23 in Umfangsrichtung erstreckenden Innenumfang 24 des Ventilgehäuses 2. In Fig. 4a sind Durchstoßungspunkte 25 zu erkennen, die herrühren von einer mehrstiftigen Ultraschallsonde, mit der das Ventilgehäuse 2 in radialer Richtung zur Herstellung der materialschlüssigen Schweißverbindung 9 bis in den Federhalter 7 hinein durchstoßen wurde.

### Bezugszeichen

- 1: Schieberproportionalventil
- 2: Ventilgehäuse
- 3: Ventilschieber
- 4: erste Wirkfläche
- 5: zweite Wirkfläche
- 6: Ventilfeder
- 7: Federhalter
- 8: Durchströmungskanal
- 9: materialschlüssige Schweißverbindung
- 10: Spulenanordnung
- 11: Kontaktanschluss
- 12: Anker
- 13: Stößel
- 14: Kern
- 15: Joch
- 16: Einführöffnung im Ventilgehäuse
- 17: Schieberabschnitt
- 18: Schieberabschnitt
- 19: Ventilgehäuseabschnitt
- 20: Ventilgehäuseabschnitt
- 21: Ventilgehäuseabschnitt
- 22: Ventilgehäuseabschnitt
- 23: Außenumfang des Federhalters
- 24: Innenumfang des Ventilgehäuses
- 25: Durchstoßungspunkte

- A: Arbeitsanschluss
- B: Arbeitsanschluss
- P: Druckanschluss
- R: Pfeilrichtung(en)
- T: Tankanschluss
- V: Verstellachse

## Patentansprüche

1. Schieberproportionalventil (1) für die Verstellung eines Fördervolumens einer Verdrängerpumpe, insbesondere einer Ölpumpe in einem Kraftfahrzeug, mit einem Ventilgehäuse (2) und einem in dem Ventilgehäuse (2) entlang einer Verstellachse (V) verschiebbar gelagerten Ventilschieber (3), der durch Bestromen einer elektrischen Spulenanordnung (10) entgegen der Federkraft einer sich axial an einem relativ zu dem Ventilgehäuse (2) fixierten Federhalter (7) abstützenden Ventilfeder (6) verschiebbar ist, wobei sowohl der, bevorzugt einteilige, Federhalter (7) als auch das Ventilgehäuse (2) aus Kunststoff ausgebildet sind und der Federhalter (7) mit dem Ventilgehäuse (2) unter Ausbildung einer materialschlüssigen Schweißverbindung (9) verschweißt ist,
**dadurch gekennzeichnet,**
**dass** der Federhalter (7) mindestens einen sich in radialer Richtung nach außen erstreckenden Schieberabschnitt (17, 18) aufweist, der in einer Umfangsrichtung mit einem Ventilgehäuseabschnitt (19, 20, 21, 22), in Form eines in radialer Richtung nach außen vorstehenden Steges, verschweißt ist.

2. Schieberproportionalventil nach Anspruch 1,
**dadurch gekennzeichnet,**
**dass** der Federhalter (7) und das Ventilgehäuse (2) in radialer Richtung überlappen.

3. Schieberproportionalventil nach Anspruch 1 oder 2,
**dadurch gekennzeichnet,**
**dass** der Schieberabschnitt (17, 18) sandwichartig zwischen zwei in Umfangsrichtung beabstandeten Ventilgehäuseabschnitten (19, 20; 21, 22), in Form von zwei nach radial außen vorstehenden Stegen, aufgenommen und bevorzugt mit beiden Ventilgehäuseabschnitten (19, 20; 21, 22) verschweißt ist, insbesondere durch Durchschweißen in Umfangsrichtung, oder dass der Schieberabschnitt (17, 18) ausschließlich in einer Umfangrichtung mit einem Ventilgehäuseabschnitt (19, 20, 21, 22), in Form eines in radialer Richtung nach außen vorstehenden Steges, verschweißt ist.

4. Schieberproportionalventil nach einem der Ansprüche 1 bis 3,
**dadurch gekennzeichnet,**
**dass** der Schieberabschnitt (17, 18) und der Ventilgehäuseabschnitt (19, 20, 21, 22) vollflächig miteinander verschweißt sind oder an, bevorzugt voneinander beabstandeten, von einer Oberflächenstruktur des Schieberabschnittes (17, 18) und/oder des Ventilgehäuses (2) definierten Schweißpunkten.

5. Schieberproportionalventil nach einem der Ansprüche 1 bis 4,
**dadurch gekennzeichnet,**
**dass** der Federhalter (7) mindestens zwei, bevorzugt zwei diametral gegenüberliegende, Schieberabschnitte (17, 18) aufweist, die jeweils mit mindestens einem Ventilgehäuseabschnitt (19, 20, 21, 22) verschweißt sind.

6. Schieberproportionalventil nach einem der vorhergehenden Ansprüche,
**dadurch gekennzeichnet,**
**dass** der Federhalter (7) und das Ventilgehäuse (2) an sich radial gegenüberliegenden Umfangs-Kontaktflächen miteinander verschweißt sind.

7. Schieberproportionalventil nach einem der vorhergehenden Ansprüche,
**dadurch gekennzeichnet,**
**dass** dem Federhalter (7) ein Axialanschlag am Ventilgehäuse (2) zur Begrenzung einer axialen Einsetzschiebebewegung des Federhalters (7) in das Ventilgehäuse (2) bei der Montage zugeordnet ist.

8. Schieberproportionalventil nach einem der vorhergehenden Ansprüche,
**dadurch gekennzeichnet,**
**dass** Federhalter (7) einen axialen, mit einem Druckanschluss (P) des Schieberproportionalventils (1) kommunizierenden Durchströmungskanal (8) begrenzt und/oder dass der Ventilschieber (3) einander entgegengesetzt angeordnete und der Größe nach unterschiedliche Wirkflächen (4, 5) für einen Verstelldruck eines Förderfluids, insbesondere Öl, aufweist, um dem Größenunterschied der Wirkflächen (4, 5) entsprechend eine auf den Ventilschieber (3) der Ventilfeder (6) entgegenwirkende Differenzkraft zu erzeugen.

9. Verfahren zur Montage eines Schieberproportionalventils (1) nach einem der vorhergehenden Ansprüche, mit den Schritten:
- Bereitstellen des Federhalters (7) und des Ventilgehäuses (2) sowie einer Ventilfeder (6)
- Einführen der Ventilfeder (6) und des Federhalters (7) in das Ventilgehäuse (2)
- Fixieren des Federhalters (7) an dem Ventilgehäuse (2)
- Fixieren des aus Kunststoff ausgebildeten Federhalters (7) an dem aus Kunststoff ausgebildeten Ventilgehäuse (2) durch Verschweißen, insbesondere durch Ultraschallschweißen oder durch Laserschweißen, und unter Ausbildung einer materialschlüssigen Schweißverbindung (9)
**dadurch gekennzeichnet,**
**dass** der Federhalter (7) mindestens einen sich in radialer Richtung nach außen erstreckenden Schieberabschnitt (17, 18) aufweist, der in einer Umfangsrichtung mit einem Ventilgehäuseabschnitt (19, 20, 21, 22), in Form eines in radialer Richtung nach außen vorstehenden Steges, verschweißt wird.

10. Verfahren nach Anspruch 9,
**dadurch gekennzeichnet,**
**dass** vor dem Verschweißen die Federvorspannung der Ventilfeder (6) durch axiales Relativbewegen von Federhalter (7) und Ventilgehäuse (2) eingestellt wird.

11. Verfahren nach Anspruch 9 oder 10,
**dadurch gekennzeichnet,**
**dass** der Schieberabschnitt (17, 18) sandwichartig zwischen zwei in Umfangsrichtung beabstandeten Ventilgehäuseabschnitten, (19, 20, 21, 22), in Form von zwei nach radial außen vorstehenden Stegen, angeordnet und bevorzugt mit beiden Ventilgehäuseabschnitten (19, 20, 21, 22) verschweißt wird, insbesondere durch Durchschweißen mindestens eines der Ventilgehäuseabschnitte (19, 20, 21, 22) in Umfangsrichtung.

12. Verfahren nach einem der Ansprüche 9 bis 11,
**dadurch gekennzeichnet,**
**dass** der Schieberabschnitt (17, 18) ausschließlich in einer Umfangrichtung mit einem Ventilgehäuseabschnitt (19, 20, 21, 22), in Form eines in radialer Richtung nach außen vorstehenden Steges, verschweißt wird, insbesondere unter gleichzeitiger Anpressdruckbeaufschlagung des Schieberabschnittes (17, 18) in Umfangsrichtung, insbesondere mittels eines Ambosses, gegen den Ventilgehäuseabschnitt (19, 20, 21, 22) von einer von dem Ventilgehäuseabschnitt (19, 20, 21, 22) abgewandten Seite des Schieberabschnitts (17, 18) her.

13. Verfahren nach einem der Ansprüche 9 bis 12,
**dadurch gekennzeichnet,**
**dass** der Federhalter (7) und der Ventilgehäuseabschnitt, (19, 20, 21, 22) an sich in radialer Richtung gegenüberliegenden Umfangs-Kontaktflächen miteinander verschweißt werden.

14. System, bevorzugt Ölfördersystem in einem Kraftfahrzeug, umfassend eine Verdrängerpumpe mit einer verstellbarem Fördervolumen, insbesondere eine Flügelradpumpe, sowie ein Schieberproportionalventil (1) nach einem der Ansprüche 1 bis 8, ausgebildet und angeordnet zum Verstellen des Fördervolumens der Verdrängerpumpe.

## Claims

1. A proportional spool valve (1) for adjusting a displaced volume of a displacement pump, in particular of an oil pump in a motor vehicle, the proportional spool valve (1) comprising a valve housing (2) and a valve spool (3) which is mounted in the valve housing (2) and displaceable along a displacement axis (V) and which can be displaced against the spring force of a valve spring (6) axially supported on a spring holder (7) which is fixed relative to the valve housing (2) by energizing an electrical coil assembly (10), both the preferably single-piece spring holder (7) and the valve housing (2) being made of plastic and the spring holder (7) being welded to the valve housing (2), an integral welded connection (9) being formed,
**characterized in that**
the spring holder (7) has at least one spool section (17, 18) which extends outwards in the radial direction and which, in a circumferential direction, is welded to a valve housing section (19, 20, 21, 22) in the form of a ridge projecting outwards in the radial direction.

2. The proportional spool valve according to claim 1,
**characterized in that**
the spring holder (7) and the valve housing (2) overlap in the radial direction.

3. The proportional spool valve according to claim 1 or 2,
**characterized in that**
the spool section (17, 18) is sandwiched between two valve housing sections (19, 20, 21, 22) in the form of two ridges projecting outwards in the radial direction which are spaced in the circumferential direction and is preferably welded to both valve housing sections (19, 20, 21, 22), in particular by full penetration welding in the circumferential direction, or that the spool section (17, 18) is welded to a valve housing section (19, 20, 21, 22) in the form of a ridge projecting outwards in the radial direction exclusively in a circumferential direction.

4. The proportional spool valve according to any one of claims 1 to 3,
**characterized in that**
the spool section (17, 18) and the valve housing section (19, 20, 21, 22) are welded to one another over the entire surface or at preferably spaced weld spots which are defined by a surface structure of the spool section (17, 18) and/or of the valve housing (2).

5. The proportional spool valve according to any one of claims 1 to 4,
**characterized in that**
the spring holder (7) has at least two, preferably two diametrically opposed, spool sections (17, 18) which are each welded to at least one valve housing section (19, 20, 21, 22).

6. The proportional spool valve according to any one of the preceding claims,
**characterized in that**
the spring holder (7) and the valve housing (2) are welded to one another at radially opposed circumferential contact surfaces.

7. The proportional spool valve according to any one of the preceding claims,
**characterized in that**
an axial stop at the valve housing (2) is assigned to the spring holder (7) in order to limit an axial sliding insertion movement of the spring holder (7) into the valve housing (2) during assembly.

8. The proportional spool valve according to any one of the preceding claims,
**characterized in that**
the spring holder (7) limits an axial through-flow channel (8) which communicates with a pressure connection (P) of the proportional spool valve (1) and/or that the valve spool (3) has effective surfaces (4, 5) for a displacement pressure of a displaced fluid, in particular oil, which are opposed to one another and which differ in size to create a differential force which counteracts on the valve spool (3) of the valve spring (6) according to the size difference of the effective surfaces (4, 5).

9. A method for assembling a proportional spool valve (1) according to any one of the preceding claims, comprising the steps:
- providing the spring holder (7) and the valve housing (2) and a valve spring (6)
- inserting the valve spring (6) and the spring holder (7) into the valve housing (2)
- fixing the spring holder (7) to the valve housing (2),
- fixing the spring holder (7) made of plastic to the valve housing (2) made of plastic by welding, in particular by ultrasonic welding or by laser welding, an integral welded connection (9) being formed,
**characterized in that**
the spring holder (7) has at least one spool section (17, 18) which extends outwards in the radial direction and which, in a circumferential direction, is welded to a valve housing section (19, 20, 21, 22) in the form of a ridge projecting outwards in the radial direction.

10. The method according to claim 9,
**characterized in that**
the spring bias of the valve spring (6) is adjusted by axially moving the spring holder (7) and the valve housing (2) relative to each other before the welding.

11. The method according to claim 9 or 10,
**characterized in that**
the spool section (17, 18) is sandwiched between two valve housing sections (19, 20, 21, 22) in the form of two ridges projecting outwards in the radial direction which are spaced apart in the circumferential direction and said spool section is preferably welded to both valve housing sections (19, 20, 21, 22), in particular by full penetration welding of at least one of the valve housing sections (19, 20, 21, 22) in the circumferential direction.

12. The method according to any one of claims 9 to 11,
**characterized in that**
the spool section (17, 18) is welded, exclusively in a circumferential direction, to a valve housing section (19, 20, 21, 22) in the form of a ridge projecting outwards in the radial direction, in particular under simultaneous application of contact pressure to the spool section (17, 18) in the circumferential direction, in particular by means of an anvil, against the valve housing section (19, 20, 21, 22) from a side of the spool section (17, 18) facing away from the valve housing section (19, 20, 21, 22).

13. The method according to any one of claims 9 to 12,
**characterized in that**
the spring holder (7) and the valve housing section (19, 20, 21, 22) are welded to one another at circumferential contact surfaces opposing each other in the radial direction.

14. A system, preferably an oil pumping system in a motor vehicle, comprising a displacement pump which has an adjustable displaced volume, in particular an impeller pump, and a proportional spool valve (1) according to any one of claims 1 to 8, the system being configured and disposed to adjust the displaced volume of the displacement pump.

## Revendications

1. Soupape proportionnelle à tiroir (1) pour le réglage d'un volume de refoulement d'une pompe volumétrique, notamment d'une pompe à huile dans un véhicule, la soupape proportionnelle à tiroir (1) comprenant un boîtier de soupape (2) et un tiroir de soupape (3) qui est disposé dans le boîtier de soupape (2) et déplaçable le long d'un axe de déplacement (V) et qui peut être déplacé contre la force de ressort d'un ressort de soupape (6) s'appuyant axialement sur un support de ressort (7) fixé par rapport au boîtier de soupape (2) par l'alimentation en courant d'un ensemble de bobines (10) électrique, le support de ressort (7), de préférence d'une seule pièce, et le boîtier de soupape (2) étant réalisés en matière plastique et le support de ressort (7) étant soudé au boîtier de soupape (2), une soudure (9) par matière étant réalisée,
**caractérisée en ce que**
le support de ressort (7) a au moins une partie de tiroir (17, 18) qui s'étend vers l'extérieur dans la direction radiale et qui, dans une direction circonférentielle, est soudé à une partie de boîtier de soupape (19, 20, 21, 22) sous la forme d'une âme qui fait saillie vers l'extérieur dans la direction radiale.

2. Soupape proportionnelle à tiroir selon la revendication 1,
**caractérisée en ce que**
le support de ressort (7) et le boîtier de soupape (2) se chevauchent dans la direction radiale.

3. Soupape proportionnelle à tiroir selon la revendication 1 ou la revendication 2,
**caractérisée en ce que**
la partie de tiroir (17, 18) est prise en sandwich entre deux parties de boîtier de soupape (19, 20, 21, 22), sous la forme de deux âmes qui font saillie vers l'extérieur dans la direction radiale, qui sont espacées dans la direction circonférentielle et la partie de tiroir (17, 18) est soudée, de préférence, aux deux parties de boîtier de soupape (19, 20, 21, 22), notamment par soudage à pénétration complète dans la direction circonférentielle, ou que la partie de tiroir (17, 18) est soudée à une partie de boîtier de soupape (19, 20, 21, 22), sous la forme d'une âme qui fait saillie vers l'extérieur dans la direction radiale, exclusivement dans une direction circonférentielle.

4. Soupape proportionnelle à tiroir selon l'une quelconque des revendications 1 à 3,
**caractérisée en ce que**
la partie de tiroir (17, 18) et la partie de boîtier de soupape (19, 20, 21, 22) sont soudées l'une à l'autre sur la surface entière ou à des points de soudage, de préférence espacés l'un de l'autre, qui sont définis par une structure de surface de la partie de tiroir (17, 18) et/ou du boîtier de soupape (2).

5. Soupape proportionnelle à tiroir selon l'une quelconque des revendications 1 à 4,
**caractérisée en ce que**
le support de ressort (7) a au moins deux parties de tiroir (17, 18), de préférence diamétralement opposées, chaque partie de tiroir (17, 18) étant soudée à au moins une partie de boîtier de soupape (19, 20, 21, 22).

6. Soupape proportionnelle à tiroir selon l'une quelconque des revendications précédentes,
**caractérisée en ce que**
le support de ressort (7) et le boîtier de soupape (2) sont soudés l'un à l'autre à des surfaces de contact circonférentielles qui sont radialement opposées.

7. Soupape proportionnelle à tiroir selon l'une quelconque des revendications précédentes,
**caractérisée en ce**
**qu'**une butée axiale sur le boîtier de soupape (2) est assignée au support de ressort (7) afin de limiter un déplacement glissant d'insertion axial du support de ressort (7) dans le boîtier de soupape (2) pendant l'assemblage.

8. Soupape proportionnelle à tiroir selon l'une quelconque des revendications précédentes,
**caractérisée en ce que**
le support de soupape (7) limite un canal d'écoulement (8) axial qui communique avec un raccord de pression (P) de la soupape proportionnelle à tiroir (1) et/ou que le tiroir de soupape (3) a des surfaces effectives (4, 5) pour une pression de déplacement d'un fluide de refoulement, notamment de l'huile, qui sont opposées l'une à l'autre et qui diffèrent par la taille afin de générer une force différentielle qui s'oppose sur le tiroir de soupape (3) du ressort de soupape (6) en fonction de la différence de taille entre les surfaces effectives (4, 5).

9. Procédé d'assemblage d'une soupape proportionnelle à tiroir (1) selon l'une quelconque des revendications précédentes, le procédé comprenant les étapes consistant à :
- fournir le support de ressort (7) et le boîtier de soupape (2) et un ressort de soupape (6)
- insérer le ressort de soupape (6) et le support de ressort (7) dans le boîtier de soupape (2)
- fixer le support de ressort (7) au boîtier de soupape (2)
- fixer le support de ressort (7) réalisé en matière plastique au boîtier de soupape (2) réalisé en matière plastique par soudage, notamment par soudage par ultrasons ou par soudage par laser, une soudure (9) par matière étant réalisée,
**caractérisé en ce que**
le support de ressort (7) a au moins une partie de tiroir (17, 18) qui s'étend vers l'extérieur dans la direction radiale et qui, dans une direction circonférentielle, est soudé à une partie de boîtier de soupape (19, 20, 21, 22) sous la forme d'une âme qui fait saillie vers l'extérieur dans la direction radiale.

10. Procédé selon la revendication 9,
**caractérisé en ce que**
la précontrainte de ressort du ressort de soupape (6) est ajustée par un déplacement relatif axial du support de ressort (7) et du boîtier de soupape (2) avant le soudage.

11. Procédé selon la revendication 9 ou la revendication 10,
**caractérisé en ce que**
la partie de tiroir (17, 18) est prise en sandwich entre deux parties de boîtier de soupape (19, 20, 21, 22), sous la forme de deux âmes qui font saillie vers l'extérieur dans la direction radiale, qui sont espacées dans la direction circonférentielle et la partie de tiroir (17, 18) est soudée, de préférence, aux deux parties de boîtier de soupape (19, 20, 21, 22), notamment par soudage à pénétration complète d'au moins une des parties de boîtier de soupape (19, 20, 21, 22) dans la direction circonférentielle.

12. Procédé selon l'une quelconque des revendications 9 à 11,
**caractérisé en ce que**
la partie de tiroir (17, 18) est soudée à une partie de boîtier de soupape (19, 20, 21, 22), sous la forme d'une âme qui fait saillie vers l'extérieur dans la direction radiale, exclusivement dans une direction circonférentielle, notamment en appliquant simultanément une pression d'appui à la partie de tiroir (17, 18) dans la direction circonférentielle, notamment au moyen d'une enclume, contre la partie de boîtier de soupape (19, 20, 21, 22) d'un côté de la partie de tiroir (17, 18) qui est détourné de la partie de boîtier de soupape (19, 20, 21, 22).

13. Procédé selon l'une quelconque des revendications 9 à 12,
**caractérisé en ce que**
le support de ressort (7) et la partie de boîtier de soupape (19, 20, 21, 22) sont soudés l'un à l'autre à des surfaces de contact circonférentielles qui sont radialement opposées.

14. Système, de préférence un système de pompage d'huile dans un véhicule, comprenant une pompe volumétrique ayant un volume de refoulement réglable, notamment une pompe à palettes, et une soupape proportionnelle à tiroir (1) selon l'une quelconque des revendications 1 à 8 qui est réalisée et disposée pour régler le volume de refoulement de la pompe volumétrique.
